# EUROPÄISCHE PATENTSCHRIFT

(11) **EP 1 031 495 B1**
(45) Veröffentlichungstag und Bekanntmachung des Hinweises auf die Patenterteilung: **19.09.2001**
(21) Anmeldenummer: 00102375.3
(22) Anmeldetag: 04.02.2000
(51) Int. Cl.: B62D 25/10

(54) **Fronthaube eines Kraftfahrzeugs**
Front bonnet of a motor vehicle
Capot avant pour véhicule à moteur

(30) Priorität: 24.02.1999 DE 19907849
(43) Veröffentlichungstag der Anmeldung: 30.08.2000
(73) Patentinhaber: Bayerische Motoren Werke Aktiengesellschaft, 80809 München (DE)
(72) Erfinder: Buck, Gerald, 85521 Riemerling (DE); Aldersley, Nicholas, 85221 Dachau (DE)

(56) Entgegenhaltungen:
- EP-A- 0 419 313
- EP-A- 0 486 093
- DE-C- 3 936 852
- US-A- 3 249 172
- US-A- 5 535 841

## Beschreibung

Die Erfindung bezieht sich auf eine Fronthaube eines Kraftfahrzeugs der im Oberbegriff des Patentanspruchs 1 genannten und aus der DE-C-39 36 852 (Figur 2) hervorgehenden Art.

Die in Figur 2 dieser Druckschrift offenbarte Fronthaube eines Kraftfahrzeugs weist ein Außenblech und ein mit diesem verbundenes Innenblech auf. Dabei hat das Außenblech der Fronthaube eine nahe der Windschutzscheibe liegende Lufteintrittsöffnung, unterhalb der sich ein auf Randabschnitten des in diesem Bereich muldenförmig ausgebildeten Innenblechs aufliegendes Führungsteil befindet. Sowohl dieses als auch ein in der Lufteintrittsöffnung vorgesehenes Eintrittsgitter können zu Reinigungszwecken herausgenommen werden. Nachdem somit das Führungsteil lösbar in die Fronthaube eingesetzt ist, wird deren Quersteifigkeit - die insbesondere bei einer dort vorhandenen schwenkbaren Lagerung der Fronthaube möglichst hoch sein soll - nicht erhöht.

Ferner geht aus der EP-A-0 419 313 eine zweiteilige, aus Kunststoff bestehende Fronthaube eines Kraftfahrzeugs hervor, in deren Außenschale zwei Luftdurchtrittsöffnungen vorgesehen sind, während an der Innenschale mehrere nach oben abstehende Verstärkungsrippen und eine nahe des windschutzscheibenseitigen Randes verlaufende Querrinne ausgebildet sind. Die Außenschale und die Innenschale sind miteinander verbunden, wobei über die in der Außenschale vorgesehenen Luftdurchtrittsöffnungen insbesondere Stauluft eindringen kann, die über die in der Querrinne vorgesehenen Durchgangsöffnungen in den Motorraum gelangt.

Aufgabe der Erfindung ist es daher, bei einer Fronthaube der im Oberbegriff des Patentanspruchs 1 genannten Art das Führungsteil derart anzuordnen und so auszubilden, dass die Fronthaube eine hohe Quersteifigkeit aufweist.

Zur Lösung der Aufgabe sind die im Patentanspruch 1 dargelegten Merkmale vorgesehen.

Da das Führungsteil erfindungsgemäß am Außenblech und am Innenblech der Fronthaube befestigt und dabei nahe deren windschutzscheibenseitigen Randbereich vorgesehen ist und sich vor allem über die ganze Breite der Fronthaube erstreckt, hat diese eine sehr hohe Quersteifigkeit, was vor allem bei einer Anlenkung der Fronthaube im Bereich der Windschutzscheibe sehr vorteilhaft ist. Zweckmäßigerweise besteht das Führungsteil aus einem Leichtmetallgußteil, wobei dieses über einen Randflansch mit dem Innenblech und unter Zwischenlage eines gummielastischen Teils mit dem Außenblech verklebt werden kann. Dabei ist auch das Führungsteil sehr preisgünstig herstellbar und hat ein vergleichsweise geringes Gewicht.

Das Führungsteil hat eine mittige Lufteintrittsöffnung, von der beidseits jeweils ein Kanal zu seitlich vorgesehenen, nach unten ausmündenden Luftauslässen verläuft, während das Wasser über die Seitenbereiche des Führungsteils abgeleitet wird. Somit wird Wasser und Schmutz über die Fronthaube abgeleitet und damit ein Korrodieren des Stirnwandbereichs verhindert.

Die Scharniere der Fronthaube sind in festigkeitsmäßig optimaler Weise im Bereich der Seitenränder des Führungsteils befestigt. Ein zum Offenhalten der Fronthaube dienender Gasdruckzylinder oder dergleichen, der an einem Endabschnitt seitlich am Fahrzeugaufbau angelenkt ist, greift mit seinem gegenüberliegenden Endabschnitt festigkeitsmäßig optimal im Bereich des Führungsteils an.

Ein Ausführungsbeispiel der Erfindung ist in der Zeichnung dargestellt und wird im folgenden erläutert. Es zeigt:
- Figur 1: eine perspektivische Darstellung eine Personenkraftwagens mit Fronthaube,
- Figur 2: einen Schnitt längs der Linie II-II in Figur 1 in größerer Darstellung,
- Figur 3: eine Einzelansicht des Innenblechs mit Führungsteil in Draufsicht in perspektivischer Darstellung.

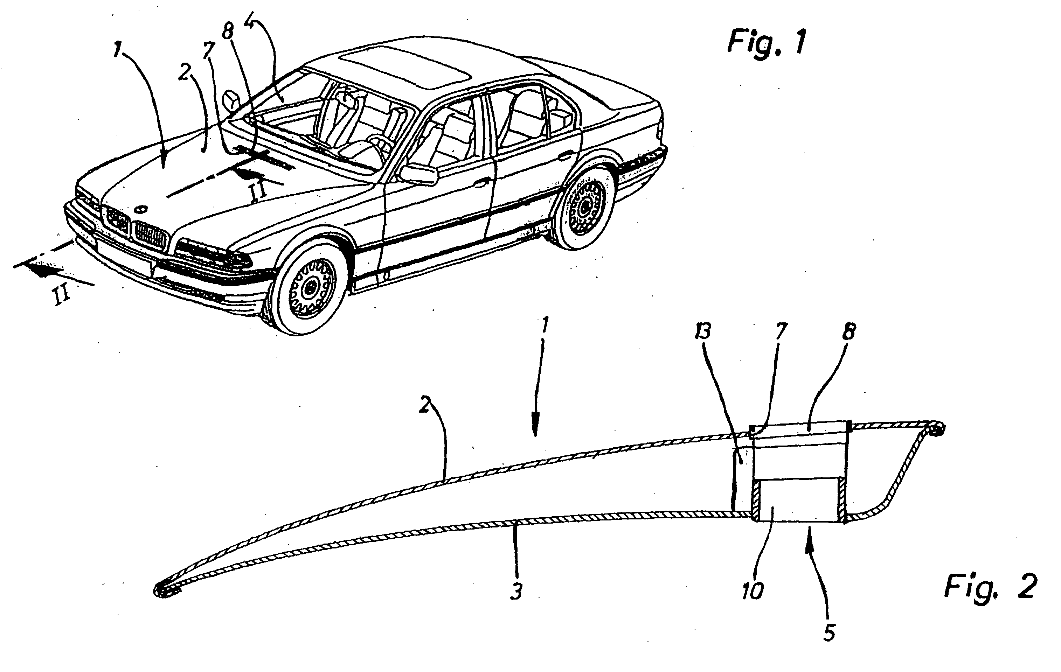

Die in den Figuren 1 und 2 dargestellte Fronthaube 1 eines Personenkraftwagens besteht aus einem Außenblech 2 und einem Innenblech 3, die längs des Randbereichs der Fronthaube 1 miteinander verbunden sind. Diese ist im Bereich einer Windschutzscheibe 4 über nicht dargestellte Scharniere schwenkbar gelagert.

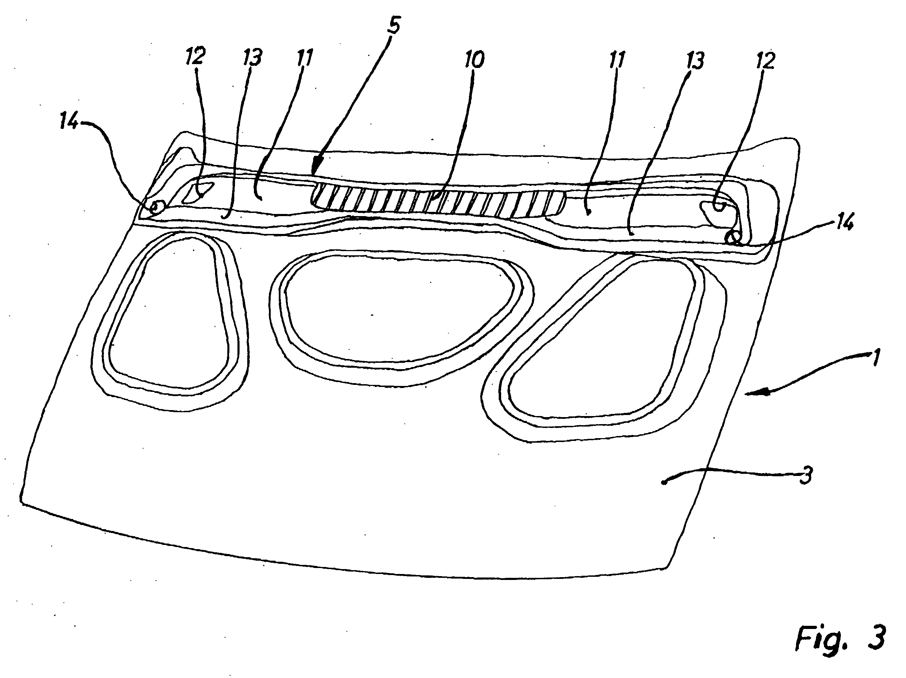

Wie in Figur 2 ersichtlich, ist zwischen dem Außenblech 2 und dem Innenblech 3 der Fronthaube 1 ein aus einem Leichtmetallgußteil bestehendes Führungsteil 5 angeordnet, das sich, wie Figur 3 zeigt, über die ganze Breite der Fronthaube 1 erstreckt. Ferner ist im Außenblech 2 nahe des windschutzscheibenseitigen Randbereichs eine rechteckförmige, sich in Fahrzeugquerrichtung erstreckende Lufteintrittsöffnung 7 vorgesehen, in die ein Eintrittsgitter 8 eingesetzt ist, unterhalb dem sich das Führungsteil 5 befindet.

In Figur 3 ist ersichtlich, daß das Führungsteil 5 eine mittige Eintrittsöffnung 10 aufweist, in die von der Fahrzeugaußenseite Luft eintritt, wobei die Eintrittsöffnung 10 auch als ein Wasserabscheider dient. Dabei führt von der Eintrittsöffnung 10 beidseits jeweils ein Luftführungskanal 11 zu den seitlichen Luftauslässen 12, die vom Innenblech 3 nach unten ausmünden. Ferner wird das über die Einlaßöffnung 10 in das Führungsteil 5 gelangende Wasser über die beidseits vorgesehenen Längskanäle 13 zu den Seitenbereichen des Führungsteils 5 nach außen und über die Durchgangsöffnungen 14 nach unten abgeleitet.

## Patentansprüche

1. Fronthaube (1) eines Kraftfahrzeugs, im Wesentlichen bestehend aus einem Außenblech (2), einem mit diesem verbundenen Innenblech (3) und einem Führungsteil (5), das sich unterhalb einer im Außenblech (2) vorgesehenen Lufteintrittsöffnung (7) befindet und zur Wasser- und Luftleitung dient, wobei das Führungsteil (5) zwischen dem Außenblech (2) und dem Innenblech (3) angeordnet ist, **dadurch gekennzeichnet, dass** das Führungsteil (5)
- am Außenblech (2) und am Innenblech (3) befestigt ist,
- sich etwa vertikal zwischen den Befestigungsstellen von Außenblech (2) und Innenblech (3) erstreckt,
- zumindest angenähert über die ganze Breite der Fronthaube (1) verläuft.

2. Fronthaube nach Anspruch 1, **dadurch gekennzeichnet, daß** das Führungsteil (5) aus einem Leichtmetallgußteil besteht.

3. Fronthaube nach Anspruch 1, **dadurch gekennzeichnet, daß** das Führungsteil (5) eine mittige Eintrittsöffnung (10) aufweist, von der beidseits jeweils ein Luftströmungskanal (11) zu den seitlichen, nach unten ausmündenden Luftauslässen (12) führt, während das über die Eintrittsöffnung in das Führungsteil gelangende Wasser über die Längskanäle (13) und die Durchgangsöffnungen (14) nach außen und nach unten abgeleitet wird.

4. Fronthaube nach Anspruch 2, **dadurch gekennzeichnet, daß** die Scharniere der Fronthaube (1) jeweils an den Seitenbereichen des Führungsteils (5) befestigt sind.

5. Fronthaube nach Anspruch 2, **dadurch gekennzeichnet, daß** wenigstens ein, zum Offenhalten der Fronthaube (1) dienendes, seinerseits seitlich am Fahrzeugaufbau angelenktes Stützelemen wie ein Gasdruckzylinder, Stützhebel oder dergleichen, im Bereich des Führungsteils (5) angreift.

## Claims

1. A car bonnet (1) substantially comprising a metal outer sheet (2), a metal inner sheet (3) connected thereto and a guide part (5) disposed inside an air inlet opening (7) in the outer sheet (2) and used for conveying water and air, the guide part (5) being disposed between the outer sheet (2) and the inner sheet (3), **characterised in that** the guide part (5)
- is fastened to the outer sheet (2) and to the inner sheet (3),
- extends approximately vertically between the places where the outer sheet (2) and the inner sheet (3) are fastened, and
- at least approximately extends over the entire width of the bonnet (1).

2. A bonnet according to claim 1, **characterised in that** the guide part (5) is made of cast light metal.

3. A bonnet according to claim 1, **characterised in that** the guide part (5) has a central inlet opening (10), from which an air flow duct (11) on each side leads to lateral downwardly opening air outlets (12), and water flowing into the guide part through the inlet opening is discharged outwards and downwards via longitudinal ducts (13) and through openings (14).

4. A bonnet according to claim 2, **characterised in that** the hinges of the bonnet (1) are fastened to side regions of the guide part (5).

5. A bonnet according to claim 2, **characterised in that** at least one support element such as a gas pressure cylinder or support lever for keeping the bonnet (1) open is pivoted to the side of the vehicle body and engages in the region of the guide part (5).

## Revendications

1. Capot avant (1) d'un véhicule automobile, composé essentiellement d'une tôle externe (2), d'une tôle interne (3) reliée à la précédente et d'une pièce de guidage (5) située en dessous d'une ouverture d'entrée d'air prévue dans la tôle externe (2) et servant de conduite d'eau et d'air, cette partie de guidage (5) se trouvant entre la tôle externe (2) et la tôle interne (3),
**caractérisé en ce que**
la partie de guidage (5)
- est fixée sur la tôle externe (2) et sur la tôle interne (3),
- s'étend verticalement entre les zones de fixation de la tôle externe (2) et de la tôle interne (3), et
- s'étend au moins approximativement, sur toute la largeur du capot (1),

2. Capot selon la revendication 1,
**caractérisé en ce que**
la pièce de guidage (5) est en métal léger coulé.

3. Capot selon la revendication 1,
**caractérisé en ce que**
la pièce de guidage (5) présente une ouverture centrale d'entrée (10) d'où part, de part et d'autre latéralement chaque fois un canal d'écoulement d'air (11) conduisant à des sorties d'air latérales (12) débouchant vers le bas, tandis que l'eau parvenant à la pièce de guidage à travers l'ouverture d'entrée est évacuée à l'extérieur vers le bas, à travers des canaux allongés (13) et des ouvertures de passage (14).

4. Capot selon la revendication 2,
**caractérisé en ce que**
les charnières du capot (1) sont fixées chacune sur les zones latérales de la pièce de guidage (5).

5. Capot selon la revendication 2,
**caractérisé en ce qu'**
un élément de soutien servant à maintenir ouvert le capot (1) articulé lui-même latéralement sur la structure du véhicule, tel qu'un vérin à gaz sous pression, un levier de soutien ou analogue, est en prise avec la zone de la pièce de guidage (5).
